# EUROPEAN PATENT SPECIFICATION

(11) **EP 2 985 980 B1**
(45) Date of publication and mention of the grant of the patent: **03.04.2019**
(21) Application number: 15180961.3
(22) Date of filing: 13.08.2015
(51) Int. Cl.: H04L 29/06, H04L 29/08

(54) **METHOD AND DEVICE FOR PLAYING STREAM MEDIA DATA**
VERFAHREN UND VORRICHTUNG ZUM ABSPIELEN VON STREAM-MEDIEN-DATEN
PROCÉDÉ ET DISPOSITIF POUR LIRE UN FLUX DE DONNÉES MULTIMÉDIA

(30) Priority: 13.08.2014 CN 201410405007
(43) Date of publication of application: 17.02.2016
(73) Proprietor: Xiaomi Inc., Beijing 100085 (CN)
(72) Inventor: LI, Feiyun, 100085 Beijing (CN); GAO, Ziguang, 100085 Beijing (CN); REN, Qiao, 100085 Beijing (CN)
(74) Representative: Delumeau, François Guy

(56) References cited:
- EP-A1- 2 075 990

## Description

### FIELD

The present disclosure relates to a field of home network, and more particularly, to methods and devices for playing stream media data.

### BACKGROUND

As the popularization of wireless networks, a smart camera connectable to a wireless network develops rapidly. When the smart camera is used to monitor (for example a scene, or an event), the smart camera may collect stream media data, and make a playing device play the collected stream media data,

In the related art, a terminal operates a camera client corresponding to the camera to detect the smart camera which has been powered on. When receiving an instruction to configure the smart camera, the terminal configures a name of the smart camera and a wireless local area network to be connected with. When configuration is completed, the stream media data collected by the smart camera may be played by the terminal via the camera client.

In the above technologies, the stream media data cannot be played by other devices but only by a terminal provided with a camera client. In such a case, the capability of playing the stream media data is limited to some terminals, which results in poor flexibility of playing the stream media data.

Document D1 (EP 2 075 990) discloses a network browsing method for browsing multimedia data shot by an IP camera.

### SUMMARY

In order to solve the problems existing in the related art, the present disclosure provides methods and devices for playing stream media data.

According to a first aspect, the invention relates to a method for playing stream media data, according to Claim 1. In a particular embodiment, the step of obtaining the IP address of the smart camera by the first terminal includes: obtaining address information of the smart camera by the first terminal; and generating the IP address according to a specified format by the first terminal based on the address information.

In a particular embodiment, the step of obtaining the address information of the smart camera by the first terminal includes: receiving by the first terminal a IP packet sent by the smart camera via a wireless local area network, the IP packet at least comprising the address information of the smart camera, said wireless local area network comprising the smart camera and the first terminal; or sending a request of obtaining the address information to a specified router by the first terminal to obtain the address information of the smart camera from the specified router, if the smart camera is connected to the wireless local area network via the specified router; or scanning a graphic code stuck on the smart camera by the first terminal to obtain an identification of the smart camera, and sending the identification of the smart camera to a network server to obtain the address information of the smart camera from the network server.

According to a second aspect, the invention relates to a method for playing stream media data, according to claim 4. The method comprises: a step in which a second terminal receives a IP address sent from a first terminal, the IP address being a IP address of a smart camera further associated to a stream media data collected by the smart camera; a step in which the second terminal sends a request of obtaining the stream media data to the smart camera, the request comprising the IP address; and a step of converting the stream media data into an image for playing if the second terminal receives the stream media data sent from the smart camera.

Before the step of receiving the IP address sent from the first terminal by the second terminal, the method further comprises: a step in which the second terminal sends device information of the second terminal to a specified router by the second terminal if the second terminal is connected to a wireless local area network via the specified router, and adding the device information to a list of playing devices by the specified router, wherein said specified router is a router containing an interface between said router and a camera client installed in said first terminal such that the first terminal can configure said smart camera via said camera client.

According to a third aspect, the invention relates to a device for playing stream media data, according to claim 5. The device comprises: a IP address obtaining module configured to obtain a IP address of a smart camera, the IP address being associated to a stream media data collected by the smart camera; a list displaying module configured to display a list of playing devices, in which the list includes device information of at least one terminal providing a function of playing the stream media data; and a IP address sending module configured to send the IP address to a second terminal if receiving an instruction of selecting the second terminal within said list of at least one terminal, such that the second terminal obtains the stream media data associated to the IP address, and converts the stream media data into an image for playing, the second terminal being any terminal of the at least one terminal.

The list displaying module includes: a request sending unit configured to send a request of obtaining the list to a specified router when the at least one terminal is connected to the wireless local area network via the specified router; a list receiving unit configured to receive the list of playing devices sent from the specified router; and a list displaying unit configured to display the list of playing devices.

In a particular embodiment, the IP address obtaining module includes: an address information obtaining unit configured to obtain address information of the smart camera; and a IP address generating unit configured to generate the IP address according to a specified format based on the address information.

In a particular embodiment, the address information obtaining unit includes: a receiving sub-unit configured to receive a IP packet sent by the smart camera via a wireless local area network, in which the IP packet at least comprises the address information of the smart camera, the wireless local area network comprising the smart camera and a first terminal; or a sending sub-unit configured to send a request of obtaining the address information to a specified router to obtain the address information of the smart camera from the specified router, if the smart camera is connected to the wireless local area network via the specified router; or a scanning sub-unit configured to scan a graphic code stuck on the smart camera to obtain an identification of the smart camera, and to send the identification of the smart camera to a network server to obtain the address information of the smart camera from the network server.

According to a fourth aspect, the invention relates to a device for playing stream media data, according to claim 9. The device includes: a IP address receiving module configured to receive a IP address sent from a first terminal, the IP address being a IP address of a smart camera further associated with a stream media data collected by the smart camera; a request sending module configured to send a request of obtaining stream media data to the smart camera, the request carrying the IP address; and a playing module configured to convert the stream media data into an image for playing if receiving the stream media data sent from the smart camera.

The device further includes: a device information sending module configured to send device information of a second terminal to a specified router, if the second terminal is connected to a wireless local area network via the specified router, the specified router adding the device information to a list of playing devices.

In one particular embodiment, the steps of one or both of the methods for playing stream media mentioned above are determined by computer program instructions.

Consequently, according to a fifth aspect, the invention is also directed to a computer program for executing the steps of a method for playing stream media as mentioned above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

The technical solutions provided by embodiments of the present disclosure may have the following advantageous effects.

In embodiments of the present disclosure, the first terminal obtains the IP address of the stream media data collected by the smart camera, and then displays the list of playing devices, such that the user selects the second terminal for playing the stream media data based on the list. After the second terminal is determined, the first terminal sends the IP address to the second terminal, and the second terminal obtains the stream media data collected by the smart camera and converts the data into images for playing. The list of playing devices may include device information of another terminal besides the first terminal. Thus, with the methods according to embodiments of the present disclosure, it can not only play the stream media data by the first terminal configured with the smart camera, but also can freely switch to another terminal for playing the stream media data, such that the stream media data may be played without any limit from terminals, thus improving the flexibility of playing the stream media data.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.
Fig. 1 is a flow chart of a method for playing stream media data according to an exemplary embodiment.
Fig. 2 is a flow chart of another method for playing stream media data according to an exemplary embodiment.
Fig. 3 is a flow chart of yet another method for playing stream media data according to an exemplary embodiment.
Fig. 4 is a schematic diagram of a system for playing stream media data according to an exemplary embodiment.
Fig. 5 is a schematic diagram of an interface of a camera client in a first terminal according to an exemplary embodiment.
Fig. 6 is a block diagram of a device for playing stream media data according to an exemplary embodiment.
Fig. 7 is a block diagram of another device for playing stream media data according to an exemplary embodiment.
Fig. 8 is a block diagram of a device according to an exemplary embodiment.
Fig. 9 is a block diagram of another device according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the disclosure. Instead, they are merely examples of apparatuses and methods consistent with aspects related to the disclosure as recited in the appended claims.

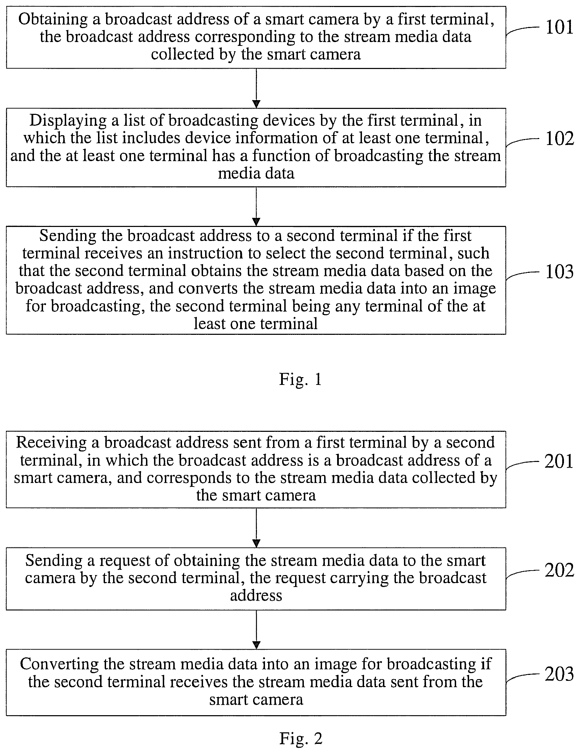

Fig. 1 is a flow chart of a method for playing stream media data according to an exemplary embodiment. Referring to Fig. 1, the method may be applied in a first terminal, and the first terminal is a configuration terminal provided with a smart camera client. The method includes the following steps.

In step 101, a first terminal obtains a IP address of a smart camera, the IP address further corresponding to a stream media data collected by the smart camera.

In step 102, the first terminal displays a list of playing devices, and the list includes device information of at least one terminal providing a function of (in other words having the capability to) playing the stream media data.

In step 103, the first terminal sends the IP address to a second terminal if receiving an instruction to select the second terminal, such that the second terminal obtains the stream media data based on the IP address, and converts the stream media data into an image for playing. The second terminal can be any terminal of the list, in other words any one of the said least one terminal.

In embodiments of the present disclosure, the first terminal obtains the IP address of the smart camera, and then displays the list of playing devices, such that the user selects the second terminal for playing the stream media data based on the list. After the second terminal is determined, the first terminal sends the IP address to the second terminal, and the second terminal obtains the stream media data collected by the smart camera and converts the data into images for playing. The list of playing devices may include other terminals besides the first terminal. Thus, with the method according to embodiments of the present disclosure, it cannot only play the stream media data by the first terminal configured with the smart camera, but also can freely switch to another terminal for playing the stream media data, such that the stream media data may be played without any limit from terminals, thus improving the flexibility of playing the stream media data.

Preferably, the step of obtaining the IP address of the smart camera by the first terminal includes: obtaining address information of the smart camera by the first terminal; and generating the IP address according to a specified format by the first terminal based on the address information.

Preferably, the step of obtaining the address information of the smart camera by the first terminal includes: receiving a IP packet sent by the smart camera via a wireless local area network by the first terminal, the IP packet at least carrying the address information of the smart camera, and the wireless local area network being a network containing the smart camera and the first terminal; or sending a request of obtaining the address information to a specified router by the first terminal to obtain the address information of the smart camera from the specified router, if the smart camera is connected to the wireless local area network via the specified router; or scanning a graphic code stuck on the smart camera by the first terminal to obtain an identification of the smart camera, and sending the identification of the smart camera to a network server to obtain the address information of the smart camera from the network server.

Preferably, the step of displaying the list of playing devices by the first terminal includes: sending a request of obtaining the list to a specified router by the first terminal when the at least one terminal is connected to the wireless local area network via the specified router; receiving the list of playing devices sent from the specified router by the first terminal; and displaying the list of playing devices by the first terminal.

The above alternative technical solutions can form, in any combination, alternative embodiments of the present disclosure, which are not elaborated herein.

Fig. 2 is a flow chart of another method for playing stream media data according to an exemplary embodiment. Referring to Fig. 2, the method may be applied in a second terminal, and the second terminal can be used to play the stream media data. The method includes the following steps.

In step 201, the second terminal receives a IP address sent from a first terminal, the IP address being a IP address of a smart camera, and corresponding to the stream media data collected by the smart camera.

In step 202, the second terminal sends a request of obtaining the stream media data to the smart camera, the request carrying the IP address.

In step 203, the second terminal converts the stream media data into an image for playing if receiving the stream media data sent from the smart camera.

Preferably, before receiving the IP address sent from the first terminal by the second terminal, the method further includes: sending information on the second terminal to a specified router by the second terminal if the second terminal is connected to a wireless local area network via the specified router, such that the specified router adds the information to a list of playing devices.

In embodiments of the present disclosure, the second terminal obtains the IP address of the smart camera sent from the first terminal, and then obtains the stream media data from the smart camera according to the IP address, and converts the data into images for playing. The second terminal can be another terminal besides the first terminal. Thus, with the method according to embodiments of the present disclosure, it cannot only play the stream media data by the first terminal configured with the smart camera, but can also freely switch to another terminal for playing the stream media data, such that the stream media data may be played without any limit from terminals, thus improving the flexibility of playing the stream media data.

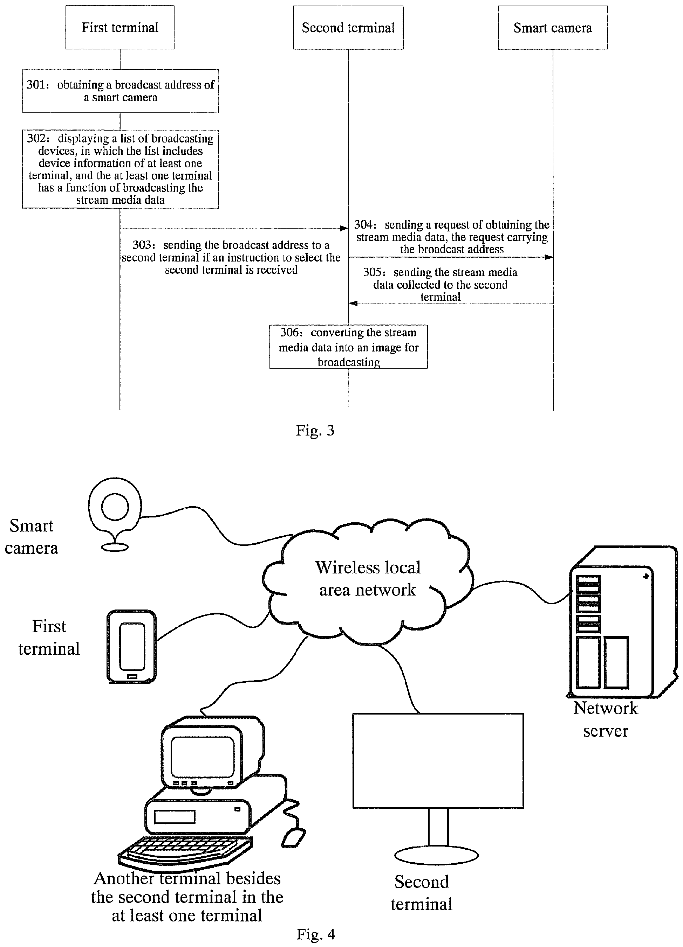

Fig. 3 is a flow chart of another method for playing stream media data according to an exemplary embodiment. Fig. 4 is a schematic diagram of a system for playing stream media data according to an exemplary embodiment. The system includes a smart camera, a first terminal, a second terminal, another terminal besides the second terminal in the at least one terminal, and a network server. The first terminal is a terminal configured with the smart camera. Both the second terminal and another terminal in the at least one terminal are terminals having the function of playing stream media data. The second terminal is a target terminal into which the stream media data of the first terminal is switched for playing. The network server is a server corresponding to the smart camera. Moreover, the smart camera, the first terminal, the second terminal, another terminal besides the second terminal in the at least one terminal, and the network server are connected to the wireless local area network.

Referring to Fig. 3, the method for playing the stream media data includes the following steps.

In step 301, a first terminal obtains a IP address of a smart camera, and the IP address corresponds to the stream media data collected by the smart camera.

There may be a plurality of smart cameras in one wireless local area network. When the first terminal configures the plurality of smart cameras via a camera client, information of the plurality of smart cameras can be displayed in the list of cameras in the first terminal. The smart camera involved in the embodiments of the present disclosure is a camera whose monitor screen the user needs to view in the plurality of smart cameras. For example, there are three smart cameras in the wireless local area network, namely, smart camera 1, smart camera 2, and smart camera 3, and the user wants to view the monitor screen of smart camera 2. In such a case, smart camera 2 is the smart camera involved in the embodiments of the present disclosure. The camera client is installed in the first terminal, such that the first terminal can configure the smart camera via the camera client.

The stream media data may include audio data, video data and multi-media data. The IP address of the stream media data is used to provide a channel to obtain the stream media data, for example, a broadcast link. Thus, in order to obtain the stream media data, the IP address of the stream media data is needed to be obtained first. The operation of obtaining the IP address of the smart camera by the first terminal can include: obtaining address information of the smart camera by the first terminal; and generating the IP address according to a specified format by the first terminal based on the address information.

Each device in the wireless local area network is assigned with one address information. The address information is not only used to identify the device but also used to search for the device. The address information can be an Internet Protocol (IP) address. The address information of the smart camera may be obtained by the first terminal in the following three ways.

In the first way, the first terminal receives a IP packet sent by the smart camera via a wireless local area network, in which the IP packet at least carries the address information of the smart camera, and the wireless local area network is a network containing the smart camera and the first terminal.

Regarding the first way, if smart cameras in the wireless local area network are connected to the wireless local area network, each smart camera generates a IP packet according to its own identification and address information. Then, the smart cameras send the IP packets periodically via the wireless local area network, and each IP packet carries the identification and address information of the smart camera. In such a case, if the first terminal receives the IP packets sent by the smart cameras, the first terminal selects the IP packet corresponding to the smart camera from the IP packets received according to the identification of the smart camera, and then obtains the address information of the smart camera from the selected IP packet.

It shall be noted that the IP packet sent by the smart camera via the wireless local area network carries not only address information of the smart camera, but also other information, for example, a name of the smart camera, device information of the smart camera, etc., which will not be defined specifically in the present disclosure.

In the second way, if the smart camera is connected to the wireless local area network via a specified router, the first terminal sends a request of obtaining the address information to the specified router, so as to obtain the address information of the smart camera from the specified router.

In the wireless local area network, the smart camera can be connected to the wireless local area network not only by an ordinary router, but also by a specified router. Regarding the second way, the specified router contains an interface between the specified router and the camera client, so when the smart camera is connected to the wireless local area network via the specified router, the specified router may receive the request of obtaining the address information sent from the first terminal via the interface between the specified router and the camera client, and the request can carry the identification of the smart camera. The specified router obtains corresponding address information from the stored corresponding relationship between identifications of smart cameras and address information of smart cameras according to the identification of the smart camera. The address information obtained is determined as the address information of the smart camera. Afterwards, the specified router sends the address information of the smart camera to the first terminal via the interface between the specified router and the camera client.

The identification of the smart camera may be the name of the smart camera, the number of the smart camera in the wireless local area network, the factory number of the smart camera, which will not be defined specifically in the present disclosure.

In the third way, the first terminal scans a graphic code stuck on the smart camera to obtain an identification of the smart camera, and sends the identification of the smart camera to a network server, so as to obtain the address information of the smart camera from the network server.

Regarding the third way, the smart camera is stuck with a graphic code which may be a QR code, a bar code, etc. The first terminal scans the graphic code to obtain the identification of the smart camera, and sends the identification of the smart camera to the network server. If the network server receives the identification of the smart camera, the network server obtains corresponding address information from the stored corresponding relationship between identifications and address information of smart cameras according to the identification of the smart camera. The address information obtained is determined as the address information of the smart camera. Afterwards, the network server sends the address information of the smart camera to the first terminal.

In embodiments of the present disclosure, the first terminal can communicate not only with the smart camera and at least one terminal in the wireless local area network, but also with the network server in the Internet. The network server in the Internet is a server corresponding to the smart camera, and is used to store the identification and address information of each smart camera. Of course, the network server can store other information and other processing functions, which will not be defined specifically in the present disclosure.

After the address information of the smart camera is obtained in any one of the above three ways, the first terminal generates the IP address of the stream media data collected by the smart camera according to a specified format based on the address information. The specified format may be predetermined, for example, the specified format may be RTSP://address information/ch.264. Supposing the address information of the smart camera obtained by the first terminal is 120.22.144.110, the first terminal just needs to replace the address information in the specified format RTSP://address information/ch.264 with 120.22.144.110, i.e. the IP address of the stream media data collected by the smart camera is RTSP:// 120.22.144.110/ch.264.

It shall be noted that in embodiments of the present disclosure, each camera has its own stream media transfer protocol, and thus each camera may convert the collected data into the stream medium data. The stream media transfer protocol can be RTSP (Real Time Streaming Protocol), or other streaming protocols, which will not be defined specifically in the present disclosure.

In step 302, the first terminal displays a list of playing devices, and the list includes device information of at least one terminal which has a function of playing the stream media data.

In order to transfer the stream media data to another terminal from the first terminal for playing, the first terminal needs to display the list of playing devices. Generally, the list includes device information of at least one terminal for playing the stream media data, and the at least one terminal needs to be connected to a wireless local area network to which the smart camera is connected. The operation of displaying the list of playing devices by the first terminal can include: sending a request of obtaining the list to a specified router by the first terminal when the at least one terminal is connected to the wireless local area network via the specified router; receiving the list of playing devices sent from the specified router by the first terminal; and displaying the list of playing devices by the first terminal.

After the specified router receives the request of obtaining the list sent from the first terminal, the specified router sends the stored list to the first terminal.

Further, when the at least one terminal is connected to the wireless local area network via the specified router, the at least one terminal sends device information of the at least one terminal to the specified router, such that the specified router adds the received device information to the list of playing devices. The device information may contain the name of the device, address information, etc. For example, the device information of any one of the at least one terminal include the name of the terminal (Name 1) and the address information (Address 1). The specified router can add Name 1 and Address 1 to the list of playing devices as shown in Table 1.

**Table 1**

| Name of Playing device | Address Information |
|---|---|
| Name1 | Address1 |
| Name2 | Address2 |
| Name3 | Address3 |
| ...... | ...... |

In addition, when the first terminal displays the list of playing devices, the first terminal can display all the information in the device formation, i.e. all the content in Table 1. Alternatively, the first terminal may only display the names of the playing devices in the device information, which will not be defined specifically in the present disclosure.

It shall be noted that, in embodiments of the present disclosure, the list of playing devices shown in Table 1 is only exemplary for illustration, but in practical applications, the list of playing devices can be displayed in various forms, which will not be defined specifically in the present disclosure.

Further, in embodiments of the present disclosure, when the first terminal plays the stream media data collected by the smart camera, the first terminal can directly display the list of playing devices on the interface of playing the stream media data. Of course, the first terminal may not directly display the list of playing devices, but set a display button. When the user triggers a display instruction by clicking the display button, the first terminal displays the list of playing devices based on the display instruction. That is, the first terminal can be triggered with a triggering condition to display the list of playing devices, or can display the list of playing devices without any triggering condition, which will not be defined specifically in the present disclosure.

It shall be noted that in embodiments of the present disclosure, the display instruction can be triggered not only by the display button but also by other conditions, for example, double clicking the screen of the first terminal, which will not be defined specifically in the present disclosure.

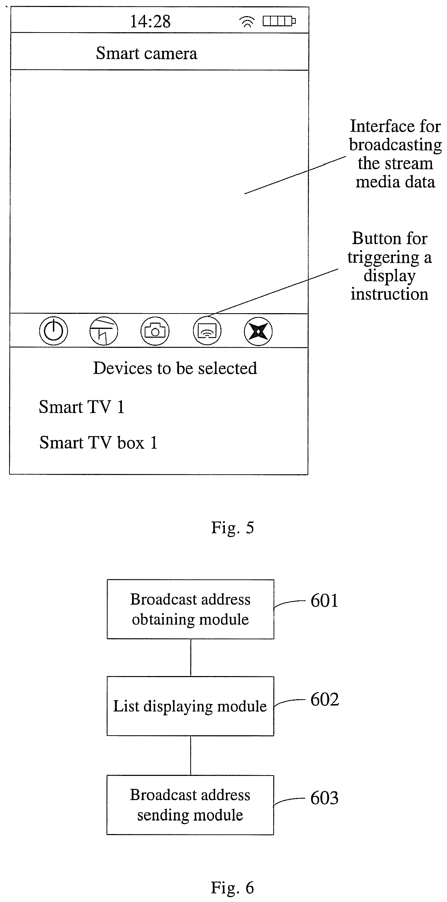

For example, referring to Fig. 5, it shows that the display instruction is trigged, for example, by the display touch. When the display button receives the display instruction, the list of playing devices from which a playing device is selected as shown in Fig. 5 is displayed, and the list includes a smart TV 1 and a smart TV box 1.

In step 303, when the instruction to select a second terminal is received, the IP address of the stream media data collected by the smart camera is sent to the second terminal, and the second terminal is any one of the at least one terminal.

After the first terminal displays the list of playing devices, the user can select one terminal from the list as the second terminal, such that the second terminal can play the stream media data collected by the smart camera. Further, the second terminal can include an interface between the second terminal and the camera client. Thus, when the first terminal receives the instruction to select a second terminal, the first terminal can obtain device information of the second terminal. Then, based on the device information of the second terminal, the IP address of the smart camera is sent to the second terminal via the interface between the second terminal and the camera client.

The selection instruction can be triggered by the user, such as by clicking, double clicking, sliding or voice manipulation.

In step 304, if the second terminal receives the IP address sent by the first terminal, the second terminal sends a request of obtaining the stream media data to the smart camera, the request carrying the IP address.

If the second terminal receives the IP address sent by the first terminal, it is determined that the second terminal is needed to play the stream media data collected by the smart camera. In such a case, the second terminal can send the request of obtaining the stream media data to the smart camera, so as to obtain the stream media data from the smart camera.

In step 305, if the smart camera receives the request of obtaining the stream media data, the smart camera sends the collected stream media data to the second terminal.

When the smart camera receives the request of obtaining the stream media data, it is determined that the second terminal is needed to play the stream media data, and the stream media data collected is sent to the second terminal.

In embodiments of the present disclosure, when the second terminal is selected to play the stream media data collected by the smart camera, the first terminal can play the stream media data collected by the smart camera at the same time. In such a case, the smart camera needs to send the collected stream media data to both the first terminal and the second terminal.

In step 306, when receiving the stream media data collected by the smart camera, the second terminal converts the stream media data into images for playing.

In embodiments of the present disclosure, the first terminal may be a mobile device, such as a mobile phone, an ipad, etc. The at least one terminal can be a mobile device, or a fixed device, such as a smart TV, an Internet TV box, etc.

In embodiments of the present disclosure, the first terminal can obtain the IP address of the smart camera, and then display the list of playing devices, such that the user selects a second terminal for playing the stream media data from the list. When the second terminal is determined, the IP address is sent to the second terminal, such that the second terminal obtains the stream media data from the smart camera, and converts the data into images for playing. The list can include device information of other terminals besides the first terminal. Thus, according to embodiments of the present disclosure, it cannot only play the stream media data by the first terminal configured with the smart camera, but also can freely switch to another terminal for playing the stream media data, such that the stream media data may be played without any limit from terminals, thus improving the flexibility of playing the stream media data.

Fig. 6 is a block diagram of a device for playing stream media data according to an exemplary embodiment. Referring to Fig. 6, the device includes a IP address obtaining module 601, a list displaying module 602, and a IP address sending module 603.

The IP address obtaining module 601 is configured to obtain a IP address of a smart camera, the IP address corresponding to the stream media data collected by the smart camera.

The list displaying module 602 is configured to display a list of playing devices, in which the list includes device information of at least one terminal, and the at least one terminal has a function of playing the stream media data.

The IP address sending module 603 is configured to send the IP address to a second terminal when receiving an instruction of selecting the second terminal, such that the second terminal obtains the stream media data based on the IP address, and converts the stream media data into an image for playing, the second terminal being any terminal of the at least one terminal.

Preferably, the IP address obtaining module 601 includes: an address information obtaining unit configured to obtain address information of the smart camera; and a IP address generating unit configured to generate the IP address according to a specified format based on the address information.

Preferably, the address information obtaining unit includes: a receiving sub-unit configured to receive a IP packet sent by the smart camera via a wireless local area network, in which the IP packet at least carries the address information of the smart camera, and the wireless local area network is a network containing the smart camera and a first terminal; or a sending sub-unit configured to send a request of obtaining the address information to a specified router to obtain the address information of the smart camera from the specified router, if the smart camera is connected to the wireless local area network via the specified router; or a scanning sub-unit configured to scan a graphic code stuck on the smart camera to obtain an identification of the smart camera, and to send the identification of the smart camera to a network server to obtain the address information of the smart camera from the network server.

Preferably, the list displaying module 602 includes: a request sending unit configured to send a request of obtaining the list to a specified router when the at least one terminal is connected to the wireless local area network via the specified router; a list receiving unit configured to receive the list of playing devices sent from the specified router; and a list displaying unit configured to display the list of playing devices.

In embodiments of the present disclosure, the IP address of the smart camera is obtained, and then the list of playing devices is displayed, such that the user selects a second terminal for playing the stream media data from the list. When the second terminal is determined, the IP address is sent to the second terminal, such that the second terminal obtains the stream media data collected by the smart camera, and converts the data into images for playing. The list can include device information of other terminals besides the first terminal. Thus, according to the embodiments of the present disclosure, it cannot only play the stream media data by the first terminal configured with the smart camera, but also can freely switch to another terminal for playing the stream media data, such that the stream media data may be played without any limit from terminals, thus improving the flexibility of playing the stream media data.

With respect to the devices in the above embodiments, the specific operation modes of individual modules therein have been described in detail in the embodiments regarding the methods, which will not be elaborated herein.

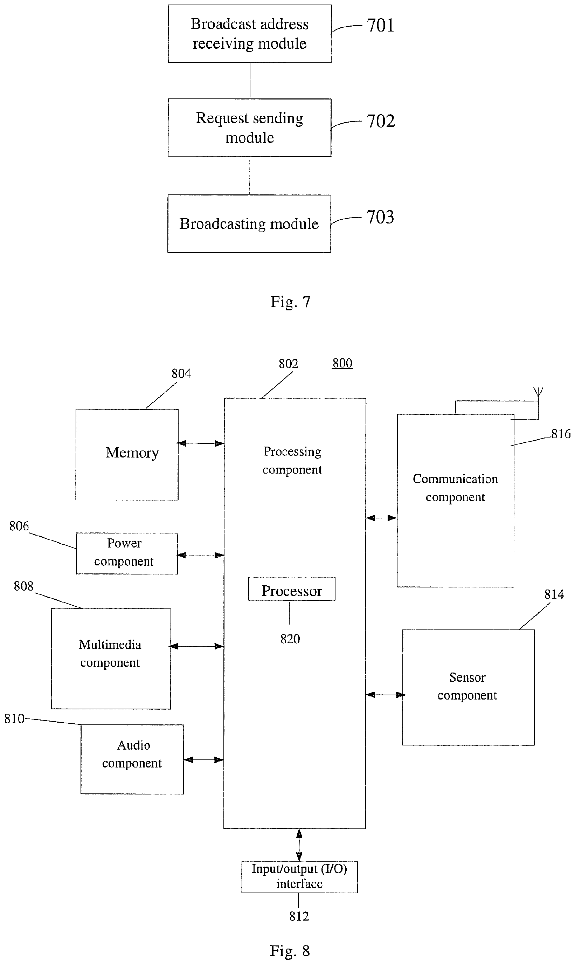

Fig .7 is a block diagram of another device for playing stream media data according to an exemplary embodiment. Referring to Fig. 7, the device includes a IP address receiving module 701, a request sending module 702, and a playing module 703.

The IP address receiving module 701 is configured to receive a IP address sent from a first terminal, in which the IP address is a IP address of a smart camera, and corresponds to the stream media data collected by the smart camera.

The request sending module 702 is configured to send a request of obtaining stream media data to the smart camera, the request carrying the IP address.

The playing module 703 is configured to convert the stream media data into an image for playing if receiving the stream media data sent from the smart camera.

Preferably, the device further includes a device information sending module configured to send device information of a second terminal to a specified router, if the second terminal is connected to a wireless local area network via the specified router, such that the specified router adds the device information to a list of playing devices.

In embodiments of the present disclosure, the IP address of the smart camera sent from the first terminal is received, and then the stream media data is obtained from the smart camera according to the IP address, and converted into images for playing. The list can include device information of other terminals besides the first terminal. Thus, according to embodiments of the present disclosure, it cannot only play the stream media data by the first terminal configured with the smart camera, but also can freely switch to another terminal for playing the stream media data, such that the stream media data may be played without any limit from terminals, thus improving the flexibility of playing the stream media data.

With respect to the devices in the above embodiments, the specific operation modes of individual modules therein have been described in detail in the embodiments regarding the methods, which will not be elaborated herein.

Fig. 8 is a block diagram of a device 800 for playing stream media data according to an exemplary embodiment. For example, the device 800 may be a mobile phone, a computer, a digital playing terminal, a messaging device, a gaming console, a tablet, a medical device, exercise equipment, a personal digital assistant, and the like.

Referring to Fig. 8, the device 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the device 800, such as the operations associated with display, telephone calls, data communications, camera operations, and recording operations. The processing component 802 may include one or more processors 820 to execute instructions to perform all or part of the steps in the above described methods. Moreover, the processing component 802 may include one or more modules which facilitate the interaction between the processing component 802 and other components. For instance, the processing component 802 may include a multimedia module to facilitate the interaction between the multimedia component 808 and the processing component 802.

The memory 804 is configured to store various types of data to support the operation of the device 800. Examples of such data include instructions for any applications or methods operated on the device 800, contact data, phonebook data, messages, pictures, video, etc. The memory 804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the device 800. The power component 806 may include a power management system, one or more power sources, and any other components associated with the generation, management, and distribution of power in the device 800.

The multimedia component 808 includes a screen providing an output interface between the device 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 808 includes a front camera and/or a rear camera. The front camera and the rear camera may receive an external multimedia datum while the device 800 is in an operation mode, such as a photographing mode or a video mode. Each of the front camera and the rear camera may be a fixed optical lens system or have focus and optical zoom capability.

The audio component 810 is configured to output and/or input audio signals. For example, the audio component 810 includes a microphone (MIC) configured to receive an external audio signal when the device 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as a keyboard, a click wheel, buttons, and the like. The buttons may include, but are not limited to, a home button, a volume button, a starting button, and a locking button.

The sensor component 814 includes one or more sensors to provide status assessments of various aspects of the device 800. For instance, the sensor component 814 may detect an open/closed status of the device 800, relative positioning of components, e.g., the display and the keypad, of the device 800, a change in position of the device 800 or a component of the device 800, a presence or absence of user contact with the device 800, an orientation or an acceleration/deceleration of the device 800, and a change in temperature of the device 800. The sensor component 814 may include a proximity sensor configured to detect the presence of nearby objects without any physical contact. The sensor component 814 may also include a light sensor, such as a CMOS or CCD image sensor, for use in imaging applications. In some embodiments, the sensor component 814 may also include an accelerometer sensor, a gyroscope sensor, a magnetic sensor, a pressure sensor, or a temperature sensor.

The communication component 816 is configured to facilitate communication, wired or wirelessly, between the device 800 and other devices. The device 800 can access a wireless network based on a communication standard, such as WiFi, 2G, or 3G, or a combination thereof. In one exemplary embodiment, the communication component 816 receives a broadcast signal or broadcast associated information from an external broadcast management system via a broadcast channel. In one exemplary embodiment, the communication component 816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as the memory 804 including instructions. The above instructions are executable by the processor 820 in the device 800, for performing the above-described methods. For example, the non-transitory computer-readable storage medium may be a ROM, a RAM, a CD-ROM, a magnetic tape, a floppy disc, an optical data storage device, and the like.

Provided is a non-transitory computer-readable storage medium having stored therein instructions that, when executed by a processor of a first terminal, causes the first terminal to perform a method for playing stream media data. The method includes: obtaining a IP address of a smart camera, the IP address corresponding to the stream media data collected by the smart camera; displaying a list of playing devices, in which the list includes device information of at least one terminal, and the at least one terminal has a function of playing the stream media data; sending the IP address to a second terminal if receiving an instruction to select the second terminal, such that the second terminal obtains the stream media data based on the IP address, and converts the stream media data into images for playing, the second terminal being any terminal of the at least one terminal.

Preferably, obtaining the IP address of the smart camera includes: obtaining address information of the smart camera; and generating the IP address according to a specified format based on the address information.

Preferably, obtaining the address information of the smart camera includes: receiving a IP packet sent by the smart camera via a wireless local area network, in which the IP packet at least carries the address information of the smart camera, and the wireless local area network is a network containing the smart camera and the first terminal; or sending a request of obtaining the address information to a specified router to obtain the address information of the smart camera from the specified router, if the smart camera is connected to the wireless local area network via the specified router; or scanning a graphic code stuck on the smart camera to obtain an identification of the smart camera, and sending the identification of the smart camera to a network server to obtain the address information of the smart camera from the network server.

Preferably, displaying the list of playing devices includes: sending a request of obtaining the list to a specified router when the at least one terminal is connected to the wireless local area network via the specified router; receiving the list of playing devices sent from the specified router; and displaying the list of playing devices.

In embodiments of the present disclosure, the IP address of the smart camera is obtained, and then the list of playing devices is displayed, such that the user selects a second terminal for playing the stream media data from the list. When the second terminal is determined, the IP address is sent to the second terminal, such that the second terminal obtains the stream media data collected from the smart camera, and converts the data into images for playing. The list can include device information of other terminals besides the first terminal. Thus, according to the embodiments of the present disclosure, it cannot only play the stream media data by the first terminal configured with the smart camera, but also can freely switch to another terminal for playing the stream media data, such that the stream media data may be played without any limit from terminals, thus improving the flexibility of playing the stream media data.

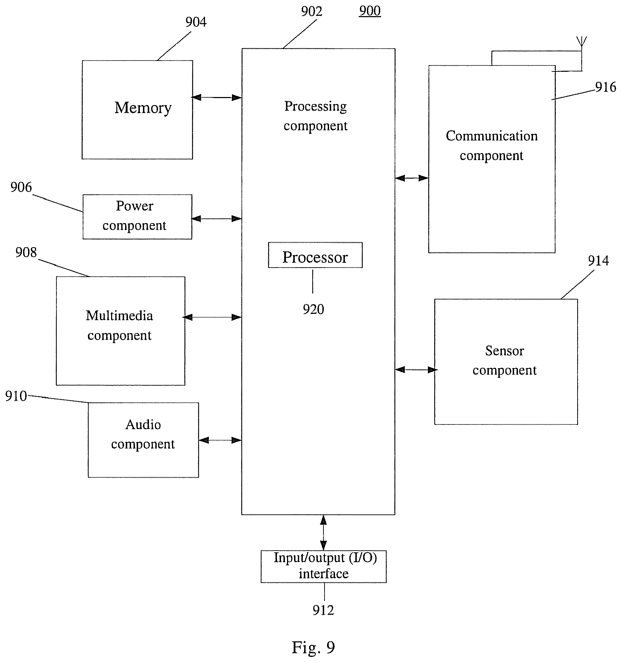

Fig. 9 is a block diagram of another device 900 for playing stream media data according to an exemplary embodiment. For example, the device 900 may be a mobile phone, a computer, a digital playing terminal, a messaging device, a gaming console, a tablet, a medical device, exercise equipment, a personal digital assistant, and the like.

Referring to Fig. 9, the device 900 may include one or more of the following components: a processing component 902, a memory 904, a power component 906, a multimedia component 908, an audio component 910, an input/output (I/O) interface 912, a sensor component 914, and a communication component 916.

The processing component 902 typically controls overall operations of the device 900, such as the operations associated with display, telephone calls, data communications, camera operations, and recording operations. The processing component 902 may include one or more processors 920 to execute instructions to perform all or part of the steps in the above described methods. Moreover, the processing component 902 may include one or more modules which facilitate the interaction between the processing component 902 and other components. For instance, the processing component 902 may include a multimedia module to facilitate the interaction between the multimedia component 908 and the processing component 902.

The memory 904 is configured to store various types of data to support the operation of the device 900. Examples of such data include instructions for any applications or methods operated on the device 900, contact data, phonebook data, messages, pictures, video, etc. The memory 904 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 906 provides power to various components of the device 900. The power component 906 may include a power management system, one or more power sources, and any other components associated with the generation, management, and distribution of power in the device 900.

The multimedia component 908 includes a screen providing an output interface between the device 900 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 908 includes a front camera and/or a rear camera. The front camera and the rear camera may receive an external multimedia datum while the device 900 is in an operation mode, such as a photographing mode or a video mode. Each of the front camera and the rear camera may be a fixed optical lens system or have focus and optical zoom capability.

The audio component 910 is configured to output and/or input audio signals. For example, the audio component 910 includes a microphone (MIC) configured to receive an external audio signal when the device 900 is in an operation mode, such as a call mode, a recording mode, and a voice recognition mode. The received audio signal may be further stored in the memory 904 or transmitted via the communication component 916. In some embodiments, the audio component 910 further includes a speaker to output audio signals.

The I/O interface 912 provides an interface between the processing component 902 and peripheral interface modules, such as a keyboard, a click wheel, buttons, and the like. The buttons may include, but are not limited to, a home button, a volume button, a starting button, and a locking button.

The sensor component 914 includes one or more sensors to provide status assessments of various aspects of the device 900. For instance, the sensor component 914 may detect an open/closed status of the device 900, relative positioning of components, e.g., the display and the keypad, of the device 900, a change in position of the device 900 or a component of the device 900, a presence or absence of user contact with the device 900, an orientation or an acceleration/deceleration of the device 900, and a change in temperature of the device 900. The sensor component 914 may include a proximity sensor configured to detect the presence of nearby objects without any physical contact. The sensor component 914 may also include a light sensor, such as a CMOS or CCD image sensor, for use in imaging applications. In some embodiments, the sensor component 914 may also include an accelerometer sensor, a gyroscope sensor, a magnetic sensor, a pressure sensor, or a temperature sensor.

The communication component 916 is configured to facilitate communication, wired or wirelessly, between the device 900 and other devices. The device 900 can access a wireless network based on a communication standard, such as WiFi, 2G, or 3G, or a combination thereof. In one exemplary embodiment, the communication component 916 receives a broadcast signal or broadcast associated information from an external broadcast management system via a broadcast channel. In one exemplary embodiment, the communication component 916 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 900 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as the memory 904 including instructions. The above instructions are executable by the processor 920 in the device 900, for performing the above-described methods. For example, the non-transitory computer-readable storage medium may be a ROM, a RAM, a CD-ROM, a magnetic tape, a floppy disc, an optical data storage device, and the like.

Provided is a non-transitory computer-readable storage medium having stored therein instructions that, when executed by a processor of a second terminal, causes the second terminal to perform a method for playing stream media data. The method includes: receiving a IP address sent from a first terminal, in which the IP address is a IP address of a smart camera, and corresponds to the stream media data collected by the smart camera; sending a request of obtaining the stream media data to the smart camera, the request carrying the IP address; and converting the stream media data into an image for playing if receiving the stream media data sent from the smart camera.

Preferably, before receiving the IP address sent from the first terminal, the method further includes: sending device information of the second terminal to a specified router when the second terminal is connected to a wireless local area network via the specified router, such that the specified router adds the device information to a list of playing devices.

In embodiments of the present disclosure, the IP address of the smart camera sent from the first terminal is received, and then the stream media data is obtained from the smart camera according to the IP address, and converted into images for playing. The list can include device information of other terminals besides the first terminal. Thus, according to embodiments of the present disclosure, it cannot only play the stream media data by the first terminal configured with the smart camera, but also can freely switch to another terminal to play the stream media data, such that the stream media data may be played without any limit from terminals, thus improving the flexibility of playing the stream media data.

## Claims

1. A method for playing stream media data, comprising:
a step (101) in which a first terminal obtains a IP address of a smart camera, the IP address being associated to a stream media data collected by the smart camera;
the method being **characterized in that** it comprises :
a step (102) in which the first terminal displays a list of playing devices, the list including device information of at least one terminal providing a function of playing the stream media data;
a step (103) of sending the IP address to a second terminal if the first terminal receives an instruction to select said second terminal within said list of at least one terminal, such that the second terminal obtains the stream media data associated to the IP address, and converts the stream media data into an image for playing.
the method being further **characterized in that** the step of displaying the list of playing devices by the first terminal, comprises:
sending, by the first terminal, a request of obtaining the list to a specified router if the at least one terminal is connected to the wireless local area network via the specified router, wherein said specified router is a router containing an interface between said router and a camera client installed in said first terminal such that the first terminal can configure said smart camera via said camera client;
receiving the list of playing devices sent from the specified router by the first terminal; and
displaying the list of playing devices by the first terminal.

2. The method according to claim 1, wherein the step of obtaining the IP address of the smart camera by the first terminal, comprises:
obtaining address information of the smart camera by the first terminal; and
generating the IP address according to a specified format by the first terminal based on the address information.

3. The method according to claim 2, wherein the step of obtaining address information of the smart camera by the first terminal, comprises:
receiving by the first terminal a IP packet sent by the smart camera via a wireless local area network, in which the IP packet at least comprises the address information of the smart camera, said wireless local area network comprising the smart camera and the first terminal; or
sending a request of obtaining the address information to said specified router by the first terminal to obtain the address information of the smart camera from the specified router, if the smart camera is connected to the wireless local area network via the specified router; or
scanning a graphic code stuck on the smart camera by the first terminal to obtain an identification of the smart camera, and sending the identification of the smart camera to a network server to obtain the address information of the smart camera from the network server.

4. A method for playing stream media data, comprising:
a step (201) in which a second terminal receives a IP address sent from a first terminal, the IP address being a IP address of a smart camera, said IP address being further associated with a stream media data collected by the smart camera;
a step (202) in which the second terminal sends (202) a request of obtaining the stream media data to the smart camera, the request carrying the IP address; and
a step of converting (203) the stream media data into an image for playing if the second terminal receives the stream media data sent from the smart camera.
the method being **characterized in that**, before the step of receiving the IP address sent from the first terminal by the second terminal, the method further comprises:
a step in which the second terminal sends device information of the second terminal to a specified router, if the second terminal is connected to a wireless local area network via the specified router, and a step of adding the device information to a list of playing devices by the specified router, wherein said specified router is a router containing an interface between said router and a camera client installed in said first terminal such that the first terminal can configure said smart camera via said camera client.

5. A device for playing stream media data, comprising:
a IP address obtaining module (601) configured to obtain a IP address of a smart camera, the IP address being associated to a stream media data collected by the smart camera;
the device being **characterized in that** it comprises :
a list displaying module (602) configured to display a list of playing devices, in which the list includes device information of at least one terminal providing a function of playing the stream media data; and
a IP address sending module (603) configured to send the IP address to a second terminal if receiving an instruction of selecting the second terminal within said list of at least one terminal, such that the second terminal obtains the stream media data associated to the IP address, and converts the stream media data into an image for playing,
the device being further **characterized in that** the list displaying module (602) comprises:
a request sending unit configured to send a request of obtaining the list to a specified router when the at least one terminal is connected to the wireless local area network via the specified router, wherein said specified router is a router containing an interface between said router and a camera client installed in said first terminal such that the first terminal can configure said smart camera via said camera client;
a list receiving unit configured to receive the list of playing devices sent from the specified router; and
a list displaying unit configured to display the list of playing devices.

6. The device according to claim 5, wherein the IP address obtaining module (601) comprises:
an address information obtaining unit configured to obtain address information of the smart camera; and
a IP address generating unit configured to generate the IP address according to a specified format based on the address information.

7. The device according to claim 6, wherein the address information obtaining unit comprises:
a receiving sub-unit configured to receive a IP packet sent by the smart camera via a wireless local area network, in which the IP packet at least comprises the address information of the smart camera, said wireless local area network comprising the smart camera and the first terminal; or
a sending sub-unit configured to send a request of obtaining the address information to a said specified router to obtain the address information of the smart camera from the specified router, if the smart camera is connected to the wireless local area network via the specified router; or
a scanning sub-unit configured to scan a graphic code stuck on the smart camera to obtain an identification of the smart camera, and to send the identification of the smart camera to a network server to obtain the address information of the smart camera from the network server.

8. The device according to claims 5-7, wherein the modules and units are in the form of a processor and a memory configured to store instructions executable by the processor.

9. A device for playing stream media data, comprising:
a IP address receiving module (701) configured to receive a IP address sent from a first terminal, the IP address being a IP address of a smart camera further associated with a stream media data collected by the smart camera;
a request sending module (702) configured to send a request of obtaining stream media data to the smart camera, the request carrying the IP address; and
a playing module (703) configured to convert the stream media data into an image for playing if receiving the stream media data sent from the smart camera,
the device being **characterized in that** it further includes:
a device information sending module configured to send device information of a second terminal to a specified router, if the second terminal is connected to a wireless local area network via the specified router, the specified router adding the device information to a list of playing devices, wherein said specified router is a router containing an interface between said router and a camera client installed in said first terminal such that the first terminal can configure said smart camera via said camera client.

10. The device according to claim 9, wherein the modules and units are in the form of a processor and a memory configured to store instructions executable by the processor.

11. A computer program including instructions for executing the steps of method for playing stream media data according to any one of claims 1 to 4 when said program is executed by a computer.

12. A recording medium readable by a computer and having recorded thereon a computer program including instructions for executing the steps of a method for playing stream media data according to any one of claims 1 to 4.

## Patentansprüche

1. Verfahren zum Abspielen von Stream-Medien-Daten, umfassend:
einen Schritt (101), in dem ein erstes Endgerät eine IP-Adresse einer intelligenten Kamera erhält, wobei die IP-Adresse den von der intelligenten Kamera gesammelten Stream-Medien-Daten zugeordnet ist, wobei das Verfahren **dadurch gekennzeichnet ist, dass** es umfasst:
einen Schritt (102), in dem das erste Endgerät eine Liste von Abspielvorrichtungen anzeigt, wobei die Liste Geräteinformationen von mindestens einem Endgerät beinhaltet, das eine Funktion zum Abspielen der Stream-Medien-Daten bereitstellt,
einen Schritt (103) zum Senden der IP-Adresse an ein zweites Endgerät, wenn das erste Endgerät eine Anweisung zum Auswählen des zweiten Endgeräts innerhalb der Liste von mindestens einem Endgerät empfängt, derart, dass das zweite Endgerät die der IP-Adresse zugeordneten Stream-Medien-Daten erhält und die Stream-Medien-Daten in ein Bild zum Abspielen umwandelt,
wobei das Verfahren ferner **dadurch gekennzeichnet ist, dass** der Schritt zum Anzeigen der Liste der Abspielvorrichtungen durch das erste Endgerät umfasst:
Senden einer Anforderung zum Erhalten der Liste an einen festgelegten Router durch das erste Endgerät, wenn das mindestens eine Endgerät über den festgelegten Router mit dem drahtlosen lokalen Netzwerk verbunden ist, wobei der festgelegte Router ein Router ist, der eine Schnittstelle zwischen dem Router und einem in dem ersten Endgerät installierten Kamera-Client enthält, derart, dass das erste Endgerät die intelligente Kamera über den Kamera-Client konfigurieren kann,
Empfangen der Liste der Abspielvorrichtungen, die von dem festgelegten Router gesendet wurden, durch das erste Endgerät, und
Anzeigen der Liste der Abspielvorrichtungen durch das erste Endgerät.

2. Verfahren nach Anspruch 1, wobei der Schritt des Erhaltens der IP-Adresse der intelligenten Kamera durch das erste Endgerät umfasst:
Erhalten von Adressinformationen der intelligenten Kamera durch das erste Endgerät, und Erzeugen der IP-Adresse gemäß einem festgelegten Format durch das erste Endgerät basierend auf den Adressinformationen.

3. Verfahren nach Anspruch 2, wobei der Schritt des Erhaltens der Adressinformationen der intelligenten Kamera durch das erste Endgerät umfasst:
Empfangen eines von der intelligenten Kamera über ein drahtloses lokales Netzwerk gesendeten IP-Pakets durch das erste Endgerät, wobei das IP-Paket mindestens die Adressinformationen der intelligenten Kamera umfasst, wobei das drahtlose lokale Netzwerk die intelligente Kamera und das erste Endgerät umfasst, oder
Senden einer Anforderung zum Erhalten der Adressinformationen an den festgelegten Router durch das erste Endgerät, um die Adressinformationen der intelligenten Kamera von dem festgelegten Router zu erhalten, wenn die intelligente Kamera über den festgelegten Router mit dem drahtlosen lokalen Netzwerk verbunden ist, oder
Scannen eines Grafikcodes, der auf der intelligenten Kamera aufgeklebt ist, durch das erste Endgerät, um eine Identifizierung der intelligenten Kamera zu erhalten, und Senden der Identifizierung der intelligenten Kamera an einen Netzwerkserver, um die Adressinformationen der intelligenten Kamera von dem Netzwerkserver zu erhalten.

4. Verfahren zum Abspielen von Stream-Medien-Daten, umfassend:
einen Schritt (201), in dem ein zweites Endgerät eine von einem ersten Endgerät gesendete IP-Adresse empfängt, wobei die IP-Adresse eine IP-Adresse einer intelligenten Kamera ist, wobei die IP-Adresse ferner mit von der intelligenten Kamera gesammelten Stream-Medien-Daten verbunden ist,
einen Schritt (202), in dem das zweite Endgerät (202) eine Anforderung zum Erhalten der Stream-Medien-Daten an die intelligente Kamera sendet, wobei die Anforderung die IP-Adresse trägt, und
einen Schritt zum Umwandeln (203) der Stream-Medien-Daten in ein Bild zum Abspielen, wenn das zweite Endgerät die von der intelligenten Kamera gesendeten Stream-Medien-Daten empfängt,
wobei das Verfahren **dadurch gekennzeichnet ist, dass** das Verfahren vor dem Schritt des Empfangens der von dem ersten Endgerät gesendeten IP-Adresse durch das zweite Endgerät ferner umfasst:
einen Schritt, in dem das zweite Endgerät Geräteinformationen des zweiten Endgeräts an einen festgelegten Router sendet, wenn das zweite Endgerät über den festgelegten Router mit einem drahtlosen lokalen Netzwerk verbunden ist, und einen Schritt zum Hinzufügen der Geräteinformationen zu einer Liste von Abspielvorrichtungen durch den festgelegten Router, wobei der festgelegte Router ein Router ist, der eine Schnittstelle zwischen dem Router und einem in dem ersten Endgerät installierten Kameraclient enthält, derart, dass das erste Endgerät die intelligente Kamera über den Kamera-Client konfigurieren kann.

5. Vorrichtung zum Abspielen von Stream-Medien-Daten, umfassend:
ein IP-Adressen-Erhaltungsmodul (601), das konfiguriert ist, um eine IP-Adresse einer intelligenten Kamera zu erhalten, wobei die IP-Adresse von der intelligenten Kamera gesammelten Stream-Medien-Daten zugeordnet ist,
wobei die Vorrichtung **dadurch gekennzeichnet ist, dass** sie umfasst:
ein Listenanzeigemodul (602), das konfiguriert ist, um eine Liste von Abspielvorrichtungen anzuzeigen, wobei die Liste Geräteinformationen von mindestens einem Endgerät beinhaltet, das eine Funktion zum Abspielen der Stream-Medien-Daten bereitstellt, und
ein IP-Adressen-Sendemodul (603), das konfiguriert ist, um die IP-Adresse an ein zweites Endgerät zu senden, wenn es eine Anweisung zum Auswählen des zweiten Endgeräts innerhalb der Liste von mindestens einem Endgerät empfängt, derart, dass das zweite Endgerät die der IP-Adresse zugeordneten Stream-Medien-Daten erhält und die Stream-Medien-Daten in ein Bild zum Abspielen umwandelt, wobei die Vorrichtung ferner **dadurch gekennzeichnet ist, dass** das Listenanzeigemodul (602) umfasst:
eine Anforderungs-Sendeeinheit, die konfiguriert ist, um eine Anforderung zum Erhalten der Liste an einen festgelegten Router zu senden, wenn das mindestens eine Endgerät über den festgelegten Router mit dem drahtlosen lokalen Netzwerk verbunden ist, wobei der festgelegte Router ein Router ist, der eine Schnittstelle zwischen dem Router und einem in dem ersten Endgerät installierten Kamera-Client enthält, derart, dass das erste Endgerät die intelligente Kamera über den Kamera-Client konfigurieren kann,
eine Listenempfangseinheit, die konfiguriert ist, um die von dem festgelegten Router gesendete Liste der Abspielvorrichtungen zu empfangen, und
eine Listenanzeigeeinheit, die konfiguriert ist, um die Liste der Abspielvorrichtungen anzuzeigen.

6. Vorrichtung nach Anspruch 5, wobei das IP-Adressen-Erhaltungsmodul (601) umfasst:
eine Adressinformationserhaltungseinheit, die konfiguriert ist, um Adressinformationen der intelligenten Kamera zu erhalten, und
eine IP-Adressen-erzeugende Einheit, die konfiguriert ist, um die IP-Adresse gemäß einem bestimmten Format basierend auf den Adressinformationen zu erzeugen.

7. Vorrichtung nach Anspruch 6, wobei die Adressinformationserhaltungseinheit umfasst:
eine Empfangsuntereinheit, die konfiguriert ist, um ein von der intelligenten Kamera über ein drahtloses lokales Netzwerk gesendetes IP-Paket zu empfangen, wobei das IP-Paket mindestens die Adressinformationen der intelligenten Kamera umfasst, wobei das drahtlose lokale Netzwerk die intelligente Kamera und das erste Endgerät umfasst, oder
eine Sende-Untereinheit, die konfiguriert ist, um eine Anforderung zum Erhalten der Adressinformationen an einen festgelegten Router zu senden, um die Adressinformationen der intelligenten Kamera von dem festgelegten Router zu erhalten, wenn die intelligente Kamera über den festgelegten Router mit dem drahtlosen lokalen Netzwerk verbunden ist, oder
eine Scan-Untereinheit, die konfiguriert ist, um einen auf der intelligenten Kamera aufgeklebten Grafikcode zu scannen, um eine Identifizierung der intelligenten Kamera zu erhalten, und um die Identifizierung der intelligenten Kamera an einen Netzwerkserver zu senden, um die Adressinformationen der intelligenten Kamera von dem Netzwerkserver zu erhalten.

8. Vorrichtung nach den Ansprüchen 5 bis 7, wobei die Module und Einheiten in Form eines Prozessors und eines Speichers ausgebildet sind, um von dem Prozessor ausführbare Anweisungen zu speichern.

9. Vorrichtung zum Abspielen von Stream-Medien-Daten, umfassend:
ein IP-Adressen-Empfangsmodul (701), das konfiguriert ist, um eine von einem ersten Endgerät gesendete IP-Adresse zu empfangen, wobei die IP-Adresse eine IP-Adresse einer intelligenten Kamera ist, die ferner mit den von der intelligenten Kamera gesammelten Stream-Medien-Daten verbunden ist,
ein Anforderungs-Sendemodul (702), das konfiguriert ist, um eine Anforderung zum Erhalten von Stream-Medien-Daten an die intelligente Kamera zu senden, wobei die Anforderung die IP-Adresse trägt, und
ein Abspielmodul (703), das konfiguriert ist, um die Stream-Medien-Daten in ein Bild zum Abspielen umzuwandeln, wenn es die von der intelligenten Kamera gesendeten Stream-Medien-Daten empfängt, wobei die Vorrichtung **dadurch gekennzeichnet ist, dass** sie ferner umfasst:
ein Geräteinformations-Sendemodul, das konfiguriert ist, um Geräteinformationen eines zweiten Endgeräts an einen festgelegten Router zu senden, wenn das zweite Endgerät über den festgelegten Router mit einem drahtlosen lokalen Netzwerk verbunden ist, wobei der festgelegte Router die Geräteinformationen zu einer Liste von Abspielvorrichtungen hinzufügt, wobei der festgelegte Router ein Router ist, der eine Schnittstelle zwischen dem Router und einem in dem ersten Endgerät installierten Kamera-Client enthält, derart, dass das erste Endgerät die intelligente Kamera über den Kamera-Client konfigurieren kann.

10. Vorrichtung nach Anspruch 9, wobei die Module und Einheiten in Form eines Prozessors und eines Speichers ausgebildet sind, um von dem Prozessor ausführbare Anweisungen zu speichern.

11. Computerprogramm, das Anweisungen zum Ausführen der Schritte eines Verfahrens zum Abspielen von Stream-Medien-Daten nach einem der Ansprüche 1 bis 4 umfasst, wenn das Programm von einem Computer ausgeführt wird.

12. Aufzeichnungsmedium, das von einem Computer lesbar ist und auf dem ein Computerprogramm aufgezeichnet ist, das Anweisungen zum Ausführen der Schritte eines Verfahrens zum Abspielen von Stream-Medien-Daten nach einem der Ansprüche 1 bis 4 umfasst.

## Revendications

1. Procédé de lecture de données multimédias en continu, comprenant :
une étape (101) dans laquelle un premier terminal obtient une adresse IP d'une caméra intelligente, l'adresse IP étant associée à des données multimédias en continu collectées par la caméra intelligente ;
le procédé étant **caractérisé en ce qu'**il comprend :
une étape (102) dans laquelle le premier terminal affiche une liste de dispositifs de lecture, la liste incluant des informations de dispositif d'au moins un terminal fournissant une fonction de lecture des données multimédias en continu ;
une étape (103) consistant à envoyer l'adresse IP à un second terminal si le premier terminal reçoit une instruction visant à sélectionner ledit second terminal dans ladite liste d'au moins un terminal, de sorte que le second terminal obtient les données multimédias en continu associées à l'adresse IP, et convertit les données multimédias en continu en une image destinée à être lue ;
le procédé étant en outre **caractérisé en ce que** l'étape d'affichage de la liste de dispositifs de lecture par le premier terminal, comprend les étapes ci-dessous consistant à :
envoyer, par le biais du premier terminal, une demande d'obtention de la liste, à un routeur spécifié, si ledit au moins un terminal est connecté au réseau local sans fil par l'intermédiaire du routeur spécifié, dans lequel ledit routeur spécifié est un routeur contenant une interface entre ledit routeur et un dispositif client de caméra installé dans ledit premier terminal, de sorte que le premier terminal peut configurer ladite caméra intelligente par l'intermédiaire dudit dispositif client de caméra ;
recevoir la liste de dispositifs de lecture envoyée par le routeur spécifié, par le biais du premier terminal ; et
afficher la liste de dispositifs de lecture par le biais du premier terminal.

2. Procédé selon la revendication 1, dans lequel l'étape d'obtention de l'adresse IP de la caméra intelligente, par le biais du premier terminal, comprend les étapes ci-dessous consistant à :
obtenir des informations d'adresse de la caméra intelligente, par le biais du premier terminal ; et
générer l'adresse IP, selon un format spécifié, par le biais du premier terminal, sur la base des informations d'adresse.

3. Procédé selon la revendication 2, dans lequel l'étape d'obtention d'informations d'adresse de la caméra intelligente par le biais du premier terminal comprend les étapes ci-dessous consistant à :
recevoir, par le biais du premier terminal, un paquet IP envoyé par la caméra intelligente par l'intermédiaire d'un réseau local sans fil, dans lequel le paquet IP comprend au moins les informations d'adresse de la caméra intelligente, ledit réseau local sans fil comprenant la caméra intelligente et le premier terminal ; ou
envoyer une demande d'obtention des informations d'adresse audit routeur spécifié par le premier terminal, pour obtenir les informations d'adresse de la caméra intelligente à partir du routeur spécifié, si la caméra intelligente est connectée au réseau local sans fil par l'intermédiaire du routeur spécifié ; ou
balayer un code graphique collé sur la caméra intelligente, par le biais du premier terminal, en vue d'obtenir une identification de la caméra intelligente, et envoyer l'identification de la caméra intelligente à un serveur de réseau, en vue d'obtenir les informations d'adresse de la caméra intelligente à partir du serveur de réseau.

4. Procédé de lecture de données multimédias en continu, comprenant :
une étape (201) dans laquelle un second terminal reçoit une adresse IP envoyée à partir d'un premier terminal, l'adresse IP étant une adresse IP d'une caméra intelligente, ladite adresse IP étant en outre associée à des données multimédias en continu collectées par la caméra intelligente ;
une étape (202) dans laquelle le second terminal envoie (202) une demande d'obtention des données multimédias en continu à la caméra intelligente, la demande transportant l'adresse IP ; et
une étape consistant à convertir (203) les données multimédias en continu en une image destinée à être lue si le second terminal reçoit les données multimédias en continu envoyées par la caméra intelligente ;
le procédé étant **caractérisé en ce que**, avant l'étape de réception de l'adresse IP, envoyée à partir du premier terminal, par le second terminal, le procédé comprend en outre :
une étape dans laquelle le second terminal envoie des informations de dispositif du second terminal à un routeur spécifié, si le second terminal est connecté à un réseau local sans fil par l'intermédiaire du routeur spécifié, et une étape consistant à ajouter les informations de dispositif à une liste de dispositifs de lecture, par le biais du routeur spécifié, dans lequel ledit routeur spécifié est un routeur contenant une interface entre ledit routeur et un dispositif client de caméra installé dans ledit premier terminal, de sorte que le premier terminal peut configurer ladite caméra intelligente par l'intermédiaire dudit dispositif client de caméra.

5. Dispositif destiné à lire des données multimédias en continu, comprenant :
un module d'obtention d'adresse IP (601) configuré de manière à obtenir une adresse IP d'une caméra intelligente, l'adresse IP étant associée à des données multimédias en continu collectées par la caméra intelligente ;
le dispositif étant **caractérisé en ce qu'**il comprend :
un module d'affichage de liste (602) configuré de manière à afficher une liste de dispositifs de lecture, dans laquelle la liste inclut des informations de dispositif d'au moins un terminal fournissant une fonction de lecture des données multimédias en continu ; et
un module d'envoi d'adresse IP (603) configuré de manière à envoyer l'adresse IP à un second terminal dès lors qu'est reçue une instruction visant à sélectionner le second terminal dans ladite liste d'au moins un terminal, de sorte que le second terminal obtient les données multimédias en continu associées à l'adresse IP, et convertit les données multimédias en continu en une image destinée à être lue ;
le dispositif étant en outre **caractérisé en ce que** le module d'affichage de liste (602) comprend :
une unité d'envoi de demande configurée de manière à envoyer une demande d'obtention de la liste à un routeur spécifié lorsque ledit au moins un terminal est connecté au réseau local sans fil par l'intermédiaire du routeur spécifié, dans lequel ledit routeur spécifié est un routeur contenant une interface entre ledit routeur et un dispositif client de caméra installé dans ledit premier terminal, de sorte que le premier terminal peut configurer ladite caméra intelligente par l'intermédiaire dudit dispositif client de caméra ;
une unité de réception de liste configurée de manière à recevoir la liste de dispositifs de lecture envoyée par le routeur spécifié ; et
une unité d'affichage de liste configurée de manière à afficher la liste de dispositifs de lecture.

6. Dispositif selon la revendication 5, dans lequel le module d'obtention d'adresse IP (601) comprend :
une unité d'obtention d'informations d'adresse configurée de manière à obtenir des informations d'adresse de la caméra intelligente ; et
une unité de génération d'adresse IP configurée de manière à générer l'adresse IP selon un format spécifié sur la base des informations d'adresse.

7. Dispositif selon la revendication 6, dans lequel l'unité d'obtention d'informations d'adresse comprend :
une sous-unité de réception configurée de manière à recevoir un paquet IP envoyé par la caméra intelligente, par l'intermédiaire d'un réseau local sans fil, dans lequel le paquet IP comprend au moins les informations d'adresse de la caméra intelligente, ledit réseau local sans fil comprenant la caméra intelligente et le premier terminal ; ou
une sous-unité d'envoi configurée de manière à envoyer une demande d'obtention des informations d'adresse, à un routeur spécifié, en vue d'obtenir les informations d'adresse de la caméra intelligente, à partir du routeur spécifié, si la caméra intelligente est connectée au réseau local sans fil par l'intermédiaire du routeur spécifié ; ou
une sous-unité de balayage configurée de manière à balayer un code graphique collé sur la caméra intelligente, en vue d'obtenir une identification de la caméra intelligente, et à envoyer l'identification de la caméra intelligente à un serveur de réseau, en vue d'obtenir les informations d'adresse de la caméra intelligente, à partir du serveur de réseau.

8. Dispositif selon l'une quelconque des revendications 5 à 7, dans lequel les modules et unités se présentent sous la forme d'un processeur, et d'une mémoire configurée de manière à stocker des instructions exécutables par le processeur.

9. Dispositif destiné à lire des données multimédias en continu, comprenant :
un module de réception d'adresse IP (701) configuré de manière à recevoir une adresse IP envoyée à partir d'un premier terminal, l'adresse IP étant une adresse IP d'une caméra intelligente associée en outre à des données multimédias en continu collectées par la caméra intelligente ;
un module d'envoi de demande (702) configuré de manière à envoyer une demande d'obtention de données multimédias en continu à la caméra intelligente, la demande transportant l'adresse IP ; et
un module de lecture (703) configuré de manière à convertir les données multimédias en continu en une image destinée à être lue, en cas de réception des données multimédias en continu envoyées à partir de la caméra intelligente ;
le dispositif étant **caractérisé en ce qu'**il inclut en outre :
un module d'envoi d'informations de dispositif configuré de manière à envoyer des informations de dispositif d'un second terminal à un routeur spécifié, si le second terminal est connecté à un réseau local sans fil par l'intermédiaire du routeur spécifié, le routeur spécifié ajoutant les informations de dispositif à une liste de dispositifs de lecture, dans lequel ledit routeur spécifié est un routeur contenant une interface entre ledit routeur et un dispositif client de caméra installé dans ledit premier terminal, de sorte que le premier terminal peut configurer ladite caméra intelligente par l'intermédiaire dudit dispositif client de caméra.

10. Dispositif selon la revendication 9, dans lequel les modules et unités se présentent sous la forme d'un processeur et d'une mémoire configurée de manière à stocker des instructions exécutables par le processeur.

11. Programme informatique incluant des instructions pour exécuter les étapes du procédé de lecture de données multimédias en continu selon l'une quelconque des revendications 1 à 4, lorsque ledit programme est exécuté par un ordinateur.

12. Support d'enregistrement lisible par un ordinateur, et sur lequel est enregistré un programme informatique incluant des instructions pour exécuter les étapes d'un procédé de lecture de données multimédias en continu selon l'une quelconque des revendications 1 à 4.
